# EUROPÄISCHE PATENTSCHRIFT

(11) **EP 0 957 655 B1**
(45) Veröffentlichungstag und Bekanntmachung des Hinweises auf die Patenterteilung: **27.06.2007**
(21) Anmeldenummer: 99105422.2
(22) Anmeldetag: 17.03.1999
(51) Int. Cl.: H04Q 11/04, H04Q 3/60

(54) **Einrichtung und Verfahren zur Handhabung einer Telekommunikationseinrichtung**
Arrangement and method for handling a telecommunication system
Dispositif et méthode pour la manipulation d'un système de télécommunication

(30) Priorität: 15.05.1998 DE 19821826
(43) Veröffentlichungstag der Anmeldung: 17.11.1999
(73) Patentinhaber: Ericsson AB, Stockholm (SE)
(72) Erfinder: Bruenle, Siegfried, 71573 Allmersbach (DE)
(74) Vertreter: Pellkofer, Dieter

(56) Entgegenhaltungen:
- EP-A- 0 734 186
- WO-A-97/46073

## Beschreibung

Die Erfindung betrifft eine Einrichtung und ein Verfahren zur Handhabung einer Telekommunikationseinrichtung mit den im Oberbegriff der Ansprüche 1 und 10 genannten Merkmalen.

### Stand der Technik

Bei bekannten Schnittstellen und Routern in Telekommunikationsnetzen erfolgt eine Übertragung von Daten üblicherweise über fest zugeordnete Übertragungskapazitäten, sogenannte Leased Lines. Die Datenübertragung erfolgt über Übertragungsstrecken, die beispielsweise ein fest verlegtes Leitungsnetz oder Funkverbindungen sein können. Regelmäßig werden jedoch nicht alle Übertragungsstrecken permanent voll ausgelastet. Bei geringem Datenaufkommen auf bestimmten Übertragungsstrecken sind stellenweise starke Überkapazitäten vorhanden, während andere Übertragungsstrecken gleichzeitig voll ausgelastet sind und dabei noch unter Kapazitätsmangel leiden. Diese Vorgänge wechseln ständig sehr schnell und bedeuten zwangsläufig entweder eine permanente Überlastung einzelner Übertragungsstrecken oder, sollen Engpässe von vorneherein vermieden werden, eine starke Überdimensionierung eines Netzausbaus. Damit sind jedoch erhebliche Mehrkosten verbunden.

Ein derartiges Telekommunikationsnetz ist aus der Patentschrift EP 0 734 186 bekannt.

### Vorteile der Erfindung

Die Telekommunikationseinrichtung mit den im Anspruch 1 genannten Merkmalen und das Verfahren zur Handhabung einer Telekommunikationseinrichtung mit den im Anspruch 10 genannten Merkmalen weist den Vorteil auf, durch eine veränderliche Übertragungskapazität der einzelnen Übertragungsstrecken eine dynamische Anpassung an den tatsächlich aufkommenden Datenverkehr zu ermöglichen. Dadurch kann eine vorhandene Netzinfrastruktur besser und effizienter ausgenutzt werden und gleichzeitig eine höhere Dienstequalität zur Verfügung gestellt werden. Das heißt, bei einer erhöhten maximalen Datendurchsatzrate pro Teilnehmer können dennoch mehr Teilnehmer gleichzeitig zufriedenstellend bedient werden.

Dies wird erfindungsgemäß dadurch erreicht, daß eine Verbindung zwischen einer Basisstation beziehungsweise einem Netzterminal und einem dieser Basisstation zugeordneten Router, einem sogenannten BS-Router beziehungsweise Base-Station-Router, mittels einer dynamischen Schnittstelle erfolgt. Durch Verwendung eines V5.2-Protokolls kann der Datenverkehr in der Basisstation konzentriert werden, wodurch eine geringere Trunk-Kapazität in Richtung des Netzes erforderlich ist. Durch Implementierung eines sogenannten DBA(Dynamic Bandwidth Allocation)-Algorithmus kann ein dynamisches Multiplexen des Router-Verkehrs, bevorzugt auch bei einer Funkübertragung in der Luft erfolgen. Auf diese Weise kann eine Übertragungskapazität in Abhängigkeit von einer anliegenden Datenmenge, beispielsweise von 64 kbit/s bis zu 2 Mbit/s zur Verfügung gestellt werden, woraus eine optimale Ausnutzung bestehender Frequenzkanäle resultiert.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein schematisches Blockschaltbild einer Konfiguration einer Telekommunikationseinrichtung in einer ersten Variante und
- Figur 2: ein schematisches Blockschaltbild einer Konfiguration in einer weiteren Variante.

### Beschreibung der Ausführungsbeispiele

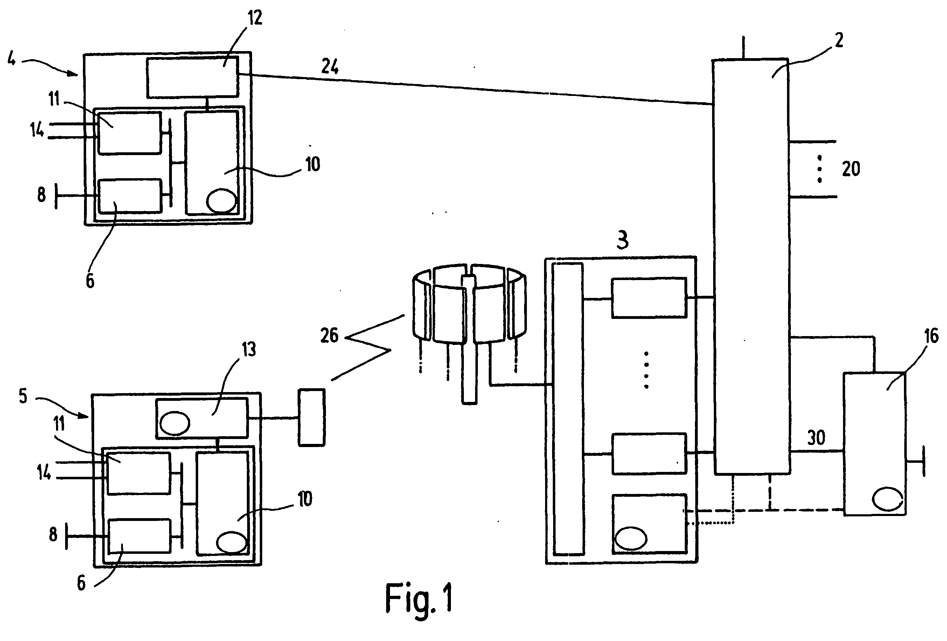

Figur 1 zeigt in einem schematischen Blockschaltbild eine beispielhafte Konfiguration einer erfindungsgemäßen Telekommunikationseinrichtung. Zentrales Bauteil der Konfiguration ist eine Basisstation 2, die mit einem sogenannten BS-Router 16 gekoppelt ist. Die Basisstation 2 ist im dargestellten Ausführungsbeispiel ein sogenannter MSV5, eine zentrale Daten- und Recheneinheit zur Verwaltung und Weiterverteilung einer Vielzahl von eingehenden Daten- und Telekommunikationsverbindungen. Die Basisstation 2 ist auch als Central Distribution Node bekannt. Erkennbar sind, angedeutet durch zwei Signaleingänge 20, eine Vielzahl von eingehenden Verbindungen, die auf unterschiedlichen Protokollen und Standards basieren können, wie im folgenden noch näher ausgeführt werden wird. In die Basisstation 2 ist ferner eine Funk-Basisstation 3 integriert.

Erkennbar sind weiterhin mehrere Netzeinheiten, sogenannte Remote Network Units 4, 5, im folgenden als RNUs 4, 5 bezeichnet, die mit der Basisstation 2 gekoppelt sind. Die Koppelung einer RNU 4, 5 mit der Basisstation 2 kann jeweils entweder über eine Funkverbindung 26 oder über eine physikalische Datenleitung 24 erfolgen. Unter einer Remote Network Unit wird in diesem Zusammenhang eine von der Basisstation 2, 3 entfernte, mit dieser in einem Datenaustausch beziehungsweise in Kommunikation stehende, Netzeinheit verstanden. Dies kann beispielsweise ein Teil eines Subnetzes oder auch eine Telekommunikations-Endeinrichtung sein.

Jede der RNUs 4, 5 ist mit einer zentralen Daten- und Recheneinheit 10 versehen, die eine Verbindung zu einer Schnittstelle 12 beziehungsweise 13 aufweist, mit der die RNU 4, 5 mit der Basisstation 2 kommunizieren können. Zudem verfügt jede der RNUs 4, 5 mindestens über einen Router 6, der beispielsweise die Form einer modularen Einsteckkarte aufweisen kann. Der Router 6 kann nach außen mit einer Ethernet-Schnittstelle nach TCP/IP-Protokoll (Transmission Control Protocol / Internet Protocol) kommunizieren. An die Router 6 sind mit 8 bezeichnete Netze ankoppelbar. Jede RNU 4, 5 weist weiterhin eine sogenannte Subscriber Unit 11 auf, die wenigstens eine Schnittstellenleitung 14, beispielsweise zu a/b, U₀- oder S₀-Schnittstellen, aufweisen. Die Anzahl der Schnittstellenleitungen ist beliebig.

Nach weiteren Ausführungsbeispielen können der Router 6 und die Subscriber Unit 11 auf einer Einsteckkarte ausgebildet sein. Möglich sind auch mehrere Subscriber Units 11 je RNU 4, 5, so daß beispielsweise mehrere Router 6 und mehrere a/b-Schnittstellen gleichzeitig bedient werden können.

Die zentrale Basisstation 2 ist mit dem BS-Router 16 gekoppelt, der über die Basisstation 2 sowohl über eine Funkverbindung 26 (DMS) - über die Funkbasisstation 3 - oder über Kabel beziehungsweise über eine physikalische Datenleitung 24 mit den RNUs 4, 5 gekoppelt ist. Die Datenleitung 24 weist beispielsweise einen maximalen Datendurchsatz von 2 Mbit/s auf und kann beispielsweise eine Schnittstelle nach einer ITU(International Telecommunications Union)-Empfehlung G.703 aufweisen. Ein solcher Datendurchsatz von 2 Mbit/s ist jedoch ebenso mittels einer sogenannten HDSL(High-bit Rate Digital Subscriber Line)-Übertragung realisierbar. Weiterhin können wahlweise optische Übertragungswege mittels Lichtwellenleiter zur Anwendung kommen.

Der BS-Router 16 ist über die Basisstation 2 mit einem Netz 20 gekoppelt. Diese Kopplung besteht aus Nx2-Mbit/s-Schnittstellen (unstrukturiert oder strukturiert). Alternativ zu diesen Nx2-Mbit/s-Schnittstellen in Richtung Netz 20 kann der BS-Router 16 optional eine Ethernet-Schnittstelle haben. Alternativ sind in Richtung Netz 20 auch andere Schnittstellen denkbar (beispielsweise 34 Mbit/s, ATM, SDH) In Richtung der RNUs 4, 5 hat der BS-Router 16 ebenfalls Nx2-Mbit/s-Schnittstellen, die entsprechend einer ITU-Empfehlung G.704 strukturiert sind.

Die 2-Mbit/s-Signale besitzen bekannterweise 64-kbit/s-Zeitschlitze, die einzeln auf die Router 6 in den RNU 4, 5 verteilt werden können. Das Verteilen dieser 64-kbit/s-Zeitschlitze führt der MSV5 (Basisstation 2) aus. Dazu wird sein Koppelfeld vom BS-Router 16 entsprechend konfiguriert. Der MSV5 und der BS-Router 16 kommunizieren über ein V5.2-Protokoll, womit sich der Router 16 identisch, beispielsweise einer ISDN-Vermittlung, verhält. Der Auf- und Abbau eines 64-kbit/s-Zeitschlitzes erfolgt entsprechend dem Auf- beziehungsweise Abbau eines ISDN-Kanales, das heißt, die Signalisierung zwischen dem BS-Router 16 erfolgt über einen Zeitschlitz gemeinsam mit der Signalisierung von anderen Diensten. Der BS-Router 16 und die Basisstation 2 kommunizieren mittels des V5.2-Protokolls, womit der Routerverkehr konzentriert wird.

So ist es beispielsweise möglich, einhundert Router 6 in den RNUs 4, 5 oder in den dem Router 6 nachgeschalteten Netzen 8 auf einen BS-Router 16 zu schalten. Obwohl der BS-Router 16 beispielsweise nur 4x2Mbit/s-Schnittstellen in Richtung RNU 4, 5 beziehungsweise Netz 20 hat, kann trotzdem jeder der einhundert Router 6 in den RNUs 4, 5 kurzzeitig eine maximale Kapazität von 30x64 kbit/s haben. Durch diese Konzentrationsfunktion im BS-Router 16 wird die zum POP (Point of Presence) abzutransportierende Kapazität minimiert. Bei einer Datenübertragung über Funk (Funkverbindung 26) kann der Router-Verkehr auch in der Luft konzentriert werden. Die dynamische Zuteilung erfolgt dabei analog zu ISDN-Diensten über einen DBA-Algorithmus (Dynamic Bandwidth Allocation).

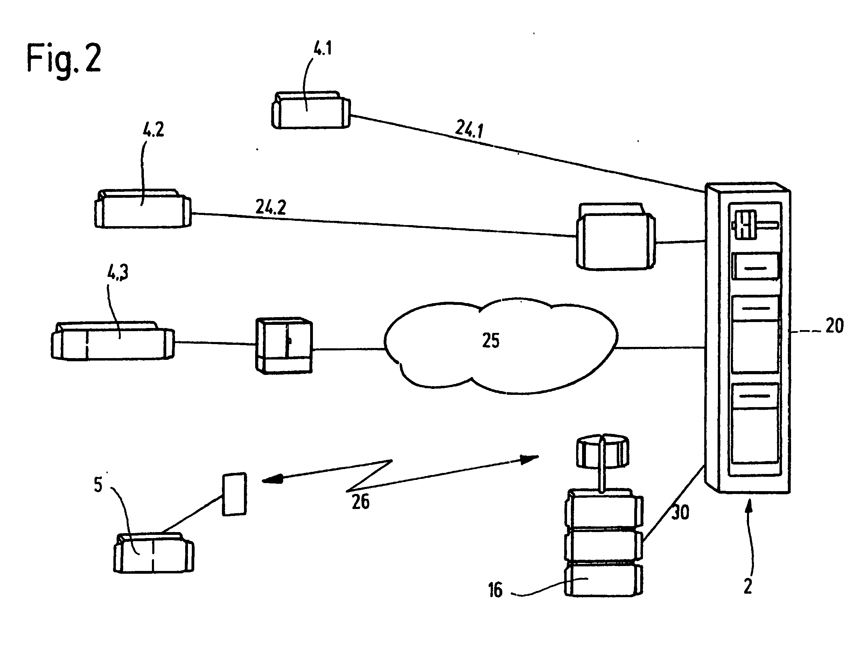

Figur 2 zeigt ein schematisches Blockschaltbild einer beispielhaften Konfiguration der Telekommunikationseinrichtung in einer weiteren Variante. Gleiche Teile wie in Figur 1 sind mit gleichen Bezugszeichen versehen und nicht nochmals erläutert. Erkennbar ist wiederum die Basisstation 2, die sogenannte Central Distribution Node beziehungsweise MSV5, die mit mehreren RNUs (Remote Network Units) 4, 5 in Verbindung steht.

So kommuniziert die RNU 4.1 über eine Datenleitung 24.1 entsprechend einer ITU-Spezifikation nach G.703 mit einem maximalen Datendurchsatz von 2 Mbit/s mit der Basisstation 2. Die Datenleitung 24.1 kann beispielsweise eine Kupferdrahtleitung sein. Erkennbar ist weiterhin eine RNU 4.2, die über eine Datenleitung 24.2 mit der Basisstation 2 in Verbindung steht. Für die Datenleitung 24.2 kann dabei beispielsweise ein optischer Leiter oder eine HDSL-Verbindung Verwendung finden. Auch hier kann der Datendurchsatz 2 Mbit/s betragen.

Die RNU 4.3 zeigt beispielhaft eine Kommunikation über ein sogenanntes SDH(Synchrone Digitale Hirarchie)-Netzwerk 25 mit der Basisstation 2. Ebenso möglich ist auch ein sogenanntes Aktives optisches Netzwerk. Die Datenübertragung erfolgt hierbei nach der SDH-Technik mit 155 Mbit/s (STM-1; Synchronous Transport Modul Level 1) oder höheren Multiplexstufen (STM-4, STM-16). Alternativ kann das Netzwerk 25 auch auf der Übertragung von ATM-Zellen basieren.

Erkennbar ist weiterhin die RNU 5, die über eine Funkübertragung 26 mit der Basisstation 2 kommuniziert.

Der BS-Router 16 kommuniziert hierbei immer mit der Basisstation 2 über eine V5.2-Schnittstelle 30, wodurch der Datenverkehr in der Basisstation 2 konzentriert wird. Auf diese Weise kann eine notwendige Trunk-Kapazität in Richtung des Netzes reduziert werden. Durch Ausnutzung eines DBA(Dynamic Bandwidth Allocation)-Algorithmus im DMS können bestehende Frequenzkanäle bei der Funkübertragung 26 besser ausgenutzt werden.

## Patentansprüche

1. Telekommunikationseinrichtung, mit wenigstens einer zentralen Basisstation (2) mit wenigstens einer Datenverbindung zu wenigstens einem übergeordneten Netz (20) zur Verteilung von Datenströmen an wenigstens eine Netzeinheit (4, 5), nachstehend bezeichnet als RNU Remote Network Unit, die mit wenigstens einer Ethernet-Schnittstelle versehen ist, und mit einem BS-Router (16) bzw. Base-Station-Router, der mit der Basisstation (2) gekoppelt ist, **dadurch gekennzeichnet, daß** der BS-Router (16) Mittel besitzt, um mit der Basisstation (2) über eine dynamische Schnittstelle mit einem V5.2-Protokoll zu kommunizieren.

2. Telekommunikationseinrichtung nach Anspruch 1, **dadurch gekennzeichnet, daß** der BS-Router (16) eine Ethernet-Schnittstelle mit einer variablen Übertragungskapazität oder Nx2 Mbit/s Schnittstelle oder andere standardisierte Schnittstellen in Richtung des übergeordneten Netzes (20) aufweist.

3. Telekommunikationseinrichtung nach Anspruch 2, **dadurch gekennzeichnet, daß** der BS-Router (16) einen Algorithmus zur variablen Zuteilung einer erforderlichen Übertragungskapazität zu einer RNU aufweist.

4. Telekommunikationseinrichtung nach Anspruch 3, **dadurch gekennzeichnet, daß** der BS-Router (16) eine Übertragungskapazität zwischen 64 kbit/s und Nx2 Mbit/s aufweist.

5. Telekommunikationseinrichtung nach Anspruch 4, **dadurch gekennzeichnet, daß** eine Datenübertragung zwischen der Basisstation (2) und einer RNU (4) mittels G.703-Codierung erfolgt.

6. Telekommunikationseinrichtung nach Anspruch 4, **dadurch gekennzeichnet, daß** eine Datenübertragung zwischen der Basisstation (2) und einer RNU (4) auf optischem Wege über Lichtwellenleiter erfolgt.

7. Telekommunikationseinrichtung nach Anspruch 4, **dadurch gekennzeichnet, daß** eine Datenübertragung zwischen der Basisstation (2) und einer RNU (4) über eine HDSL-Codierung erfolgt.

8. Telekommunikationseinrichtung nach Anspruch 4, **dadurch gekennzeichnet, daß** eine Datenübertragung zwischen der Basisstation (2) und einer RNU (5) mittels Funkübertragung (26) erfolgt.

9. Telekommunikationseinrichtung nach einem der vorhergehenden Ansprüche, **dadurch gekennzeichnet, daß** einhundert RNU (4, 5) mit variabler Datenrate 64 k bis 2 Mbit/s auf 4x2 Mbit/s konzentriert werden, wobei jede RNU (4, 5) eine Spitzenbitrate von 2 Mbit/s und einen durchschnittlichen Datendurchsatz von zirka 64 kbit/s hat.

10. Verfahren zur Handhabung einer Telekommunikationseinrichtung, mit wenigstens einer zentralen Basisstation (2) mit wenigstens einer Datenverbindung zu wenigstens einem übergeordneten Netz (20) zur Verteilung von Datenströmen an wenigstens eine Netzeinheit (4, 5), nachstehend bezeichnet als RNU, die mit wenigstens einer Ethernet-Schnittstelle versehen ist Remote Network Unit, und mit einem BS-Router (16) bzw. Base-Station-Router, der mit der Basisstation (2) gekoppelt ist, **dadurch gekennzeichnet, daß** der BS-Router (16) mit der Basisstation (2) mit einem V5.2-Protokoll kommuniziert und den Datenverkehr der Daten-Schnittstellen in den RNUs (4, 5) damit konzentriert.

## Claims

1. A telecommunications device having at least one central base station (16) or base station router with at least one data connection to at least one superior level network (20) for the distribution of data streams to at least one network unit, Remote Network Unit (4, 5), hereinafter called an RNU, which is provided with at least one Ethernet interface, and having a BS router (16) or base station router, which is coupled to the base station, **characterised in that** the BS router (16) has means to communicate with the base station (2) via a dynamic interface with a V5.2 protocol.

2. A telecommunications device in accordance with claim 1, **characterised in that** the BS router (16) has an Ethernet interface with a variable transmission capacity or an Nx2 Mbit/s interface or other standardised interfaces in the direction of the superior level network (20).

3. A telecommunications device in accordance with claim 2, **characterised in that** the BS router (16) has an algorithm for the variable assignment of a required transmission capacity to an RNU.

4. A telecommunications device in accordance with claim 3, **characterised in that** the BS router (16) has a transmission capacity between 64 kbit/s and Nx2 Mbit/s.

5. A telecommunications device in accordance with claim 4, **characterised in that** a data transmission takes place between the base station (2) and an RNU (4) by means of G.703 encoding.

6. A telecommunications device in accordance with claim 4, **characterised in that** a data transmission takes place between the base station (2) and an RNU (4) in an optical manner via optical waveguides.

7. A telecommunications device in accordance with claim 4, **characterised in that** a data transmission takes place between the base station (2) and an RNU (4) by means of an HDSL encoding.

8. A telecommunications device in accordance with claim 4, **characterised in that** a data transmission takes place between the base station (2) and an RNU (5) by means of radio transmission (26).

9. A telecommunications device in accordance with any one of the preceding claims, **characterised in that** one hundred RNUs (4, 5) with a variable data rate of 64 k to 2 Mbit/s are concentrated to 4x2 Mbit/s, with each RNU (4, 5) having a peak bit rate of 2 Mbit/s and an average data throughput of approximately 64 kbit/s.

10. A method of handling a telecommunications device having at least one central base station (16) or base station router with at least one data connection to at least one superior level network (20) for the distribution of data streams to at least one network unit, Remote Network Unit (4, 5), hereinafter called an RNU, which is provided with at least one Ethernet interface, and having a BS router (16) or base station router, which is coupled to the base station, **characterised in that** the BS router (16) communicates with the base station (2) using a V5.3 protocol and thus concentrates the data traffic of the data interfaces in the RNUs (4, 5).

## Revendications

1. Système de télécommunications, comprenant au moins une station de base centrale (2) avec au moins une liaison de données avec au moins un réseau maître (20) pour la distribution de flux de données vers au moins une unité de réseau (4, 5), désignée dans ce qui suit par RNU (Remote Network Unit), qui est dotée d'au moins une interface Ethernet, et comprenant un routeur BS (16) c'est-à-dire un routeur de station de base qui est accouplé à la station de base (2), **caractérisé en ce que** le routeur BS (16) possède des moyens afin de communiquer avec la station de base (2) via une interface dynamique avec un protocole V 5.2.

2. Système de télécommunications selon la revendication 1, **caractérisé en ce que** le routeur BS (16) comprend une interface Ethernet avec une capacité de transmission variable ou une interface à Nx2 Mbits/s ou d'autres interfaces standardisées en direction du réseau maître (20).

3. Système de télécommunications selon la revendication 2, **caractérisé en ce que** le routeur BS (16) comprend un algorithme pour l'attribution variable d'une capacité de transmission requise vers une RNU.

4. Système de télécommunications selon la revendication 3, **caractérisé en ce que** le routeur BS (16) présente une capacité de transmission entre 64 kbits/s et Nx2 Mbits/s.

5. Système de télécommunications selon la revendication 4, **caractérisé en ce qu'**une transmission de données entre la station de base (2) et une RNU (4) a lieu au moyen d'un codage G.703.

6. Système de télécommunications selon la revendication 4, **caractérisé en ce qu'**une transmission de données entre la station de base (2) et une RNU (4) a lieu par voie optique au moyen de guides d'ondes de lumière.

7. Système de télécommunications selon la revendication 4, **caractérisé en ce qu'**une transmission de données entre la station de base (2) et une RNU (4) a lieu au moyen d'un codage HDSL.

8. Système de télécommunications selon la revendication 4, **caractérisé en ce qu'**une transmission de données entre la station de base (2) et une RNU (5) a lieu au moyen d'une transmission radio (26).

9. Système de télécommunications selon l'une des revendications précédentes, **caractérisé en ce que** cent RNU (4, 5) avec une capacité de données variable de 64 k à 2 Mbits/s sont concentrées à 4x2 Mbits/s, chaque RNU (4, 5) ayant une capacité de pointe de 2 Mbits/s et une capacité de transmission de données moyenne d'environ 64 kbits/s.

10. Procédé de gestion d'un système de télécommunications, comprenant au moins une station de base centrale (2) avec au moins une liaison de données vers au moins un réseau maître (20) pour la distribution de flux de données vers au moins une unité de réseau (4, 5), désignée dans ce qui suit par RNU (Remote Network Unit), qui est dotée d'au moins une interface Ethernet, et comprenant un routeur BS (16) c'est-à-dire un routeur de station de base qui est accouplé à la station de base (2), **caractérisé en ce que** le routeur BS (16) communique avec la station de base (2) avec un protocole V 5.2 et concentre ainsi le trafic de données des interfaces de données dans les RNU (4, 5).
